# EUROPEAN PATENT APPLICATION

(11) **EP 3 196 492 A1**
(43) Date of publication of application: **26.07.2017**
(21) Application number: 17152230.3
(22) Date of filing: 19.01.2017
(51) Int. Cl.: F16C 37/00, F16C 33/58, F01D 25/12, F16C 19/06

(54) **SYSTEMS AND METHODS FOR COOLING A BEARING**

(30) Priority: 21.01.2016 US 201615002677
(71) Applicant: United Technologies Corporation, Farmington, CT 06032 (US)
(72) Inventor: DUFFY, Kevin, Hartford, CT Connecticut 06105 (US)
(74) Representative: Leckey, David Herbert

(57) **Abstract**

Systems and methods for cooling a bearing may comprise a bearing ring (312;412;512), a rotational member (316) coupled to the bearing ring (312;412;512), a bearing housing (314;414;514) coupled to a housing surface (322) of the bearing ring (312;412;512), a first airflow passage (368;580) through the bearing ring (312;412;512), a cooling entrance pathway (831;832;834;836;838), and/or a cooling exit pathway (833;835;837;839). The bearing housing (314;414;514) may comprise a first passage inlet (368;580) configured to allow a cooling airflow. The first airflow passage (368;580) may comprise a first passage outlet (333), may be aligned with the first passage inlet (368;580), and may be configured to allow the cooling airflow. The cooling entrance pathway (831...838) may extend from a first engine airflow channel to the first passage inlet (368;580). The cooling exit pathway (833...839) may extend from the first passage outlet (333) to a second engine airflow channel.

## Description

### FIELD

The present disclosure relates generally to gas turbine engines. More particularly, the present disclosure relates to cooling bearings within a gas turbine engine.

### BACKGROUND

Current engine architectures include relatively high lubricant flow rates to maintain bearings below their operational temperature limits. However, the cooling effectiveness of lubricant flow is reduced at higher flow rates due in part to lubricant churning, or the creation of drag and temperature increase by the lubricant flow itself, within the bearing cavity.

### SUMMARY

A bearing cooling system in a gas turbine engine may comprise a bearing ring, a rotational member coupled to the bearing ring, a bearing housing coupled to a housing surface of the bearing ring, a first airflow passage through the bearing ring, a cooling entrance pathway, and/or a cooling exit pathway. The bearing housing may comprise a first passage inlet configured to allow a cooling airflow. The first airflow passage may comprise a first passage outlet, may be aligned with the first passage inlet, and may be configured to allow the cooling airflow. The cooling entrance pathway may extend from a first engine airflow channel to the first passage inlet. The cooling exit pathway may extend from the first passage outlet to a second engine airflow channel. The first engine airflow channel and/or the second engine airflow channel may be a primary airflow channel, a secondary airflow channel, and/or a bypass airflow channel. The cooling entrance pathway may extend from the primary airflow channel at a point forward and/or aft of a low pressure compressor.

In various embodiments, the first engine airflow channel may comprise a scoop configured to guide a first engine airflow into the cooling entrance pathway. The bearing cooling system may be configured to cool a low rotor thrust bearing, a high rotor thrust bearing, and/or a fan rotor thrust bearing.

In various embodiments, the bearing cooling system may comprise a second airflow passage through the bearing ring aligned with a second passage inlet in the bearing housing. The first airflow passage and the second airflow passage may be fluidly connected by a bridging channel in the bearing ring. In various embodiments, the first passage inlet may be disposed on a first axial end and/or a second axial end of the bearing ring, and the first passage outlet may be disposed on the first axial end and/or the second axial end of the bearing ring.

In various embodiments, a gas turbine engine may comprise a bypass airflow channel, a core engine airflow channel, a bearing, a cooling entrance pathway, and/or a cooling exit pathway. The bearing may comprise a bearing housing having a first passage inlet, a bearing ring, and/or a first airflow passage disposed within the bearing ring, wherein the first airflow passage may comprise a first passage outlet and may be aligned with the first passage inlet. The cooling entrance pathway may extend from the core engine airflow channel to the first passage inlet. The cooling exit pathway may extend from the first passage outlet to the bypass airflow channel. In various embodiments, the cooling entrance pathway may be disposed forward of a low pressure compressor.

In various embodiments, a method for cooling a bearing in a gas turbine engine may comprise passing a first cooling airflow, via a first cooling entrance pathway, from a first engine airflow channel to a first passage inlet in a bearing housing, passing the first cooling airflow through a first airflow passage in a bearing ring, and/or passing the first cooling airflow, via a first cooling exit pathway, from a first passage outlet to a second engine airflow channel. The first engine airflow channel and/or the second engine airflow channel may be a primary airflow channel, a secondary airflow channel, and/or a bypass airflow channel. The bearing may be a low rotor thrust bearing, a high rotor thrust bearing, and/or a fan rotor thrust bearing.

In various embodiments, the method may comprise passing a second cooling airflow, via a second cooling entrance pathway, from a third engine airflow channel to a second passage inlet in the bearing housing, passing the second cooling airflow through a second airflow passage in the bearing ring, and/or passing the second cool airflow, via a second cooling exit pathway, from a second passage outlet to a fourth engine airflow channel. In various embodiments, the first and/or third engine airflow channel may be a primary airflow channel, a secondary airflow channel, and/or a bypass airflow channel. In various embodiments, the second and/or fourth engine airflow channel may be the primary airflow channel, the secondary airflow channel, and/or the bypass airflow channel.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates a schematic cross-section view of a gas turbine engine, in accordance with various embodiments;
FIG. 2 illustrates a schematic cross-section view of a gas turbine engine showing airflow patterns, in accordance with various embodiments;
FIG. 3 illustrates a cross-section view of a bearing assembly, in accordance with various embodiments;
FIG. 4 illustrates a cross-section view of a bearing assembly, in accordance with various embodiments;
FIG. 5 illustrates a cross-section view of a bearing assembly, in accordance with various embodiments;
FIG. 6 illustrates a cross-section view of a bearing ring baffle, in accordance with various embodiments;
FIG. 7 illustrates a partial cross-section view of a bearing ring, in accordance with various embodiments;
FIGS. 8A-D illustrate perspective views of a system for cooling a bearing, in accordance with various embodiments; and
FIG. 9 illustrates a method for cooling a bearing in a gas turbine engine, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

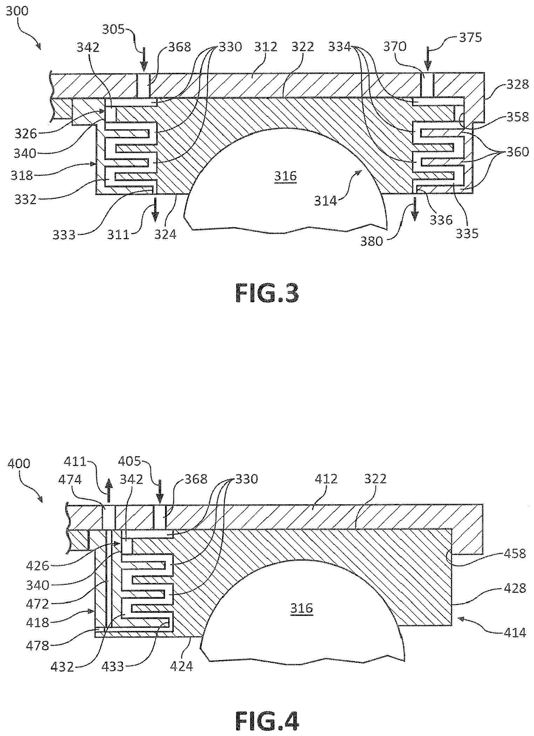

Generally, as depicted in FIGS. 3-5, in accordance with various embodiments, a bearing assembly may comprise one or more airflow passages 332, which may be in a bearing ring, through which cooling airflow may travel. The airflow passages may comprise any shape and may have a high surface area to volume ratio. The cooling airflow may pass through the airflow passages and cool the bearing assembly as the result of convective heat exchange. The cooling air may absorb heat from the bearing assembly, resulting in the cooling airflow being heated and the bearing assembly being cooled.

In various embodiments, the cooling airflow may be taken from anywhere within the gas turbine engine, for example, a bypass airflow channel, a primary airflow channel, a secondary airflow channel, and/or another location where the airflow may be cooler than the bearing to be cooled. In various embodiments, cooling airflow may be taken from a place that has a high air pressure and/or a higher temperature than the bearing to be cooled. In such a case, the cooling airflow may be expanded, or depressurized, by an orifice in order to decrease the airflow temperature before cooling the bearing.

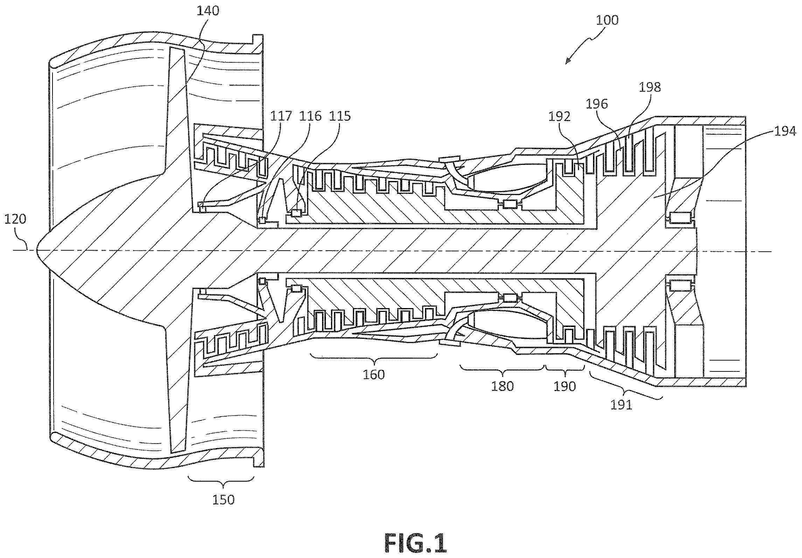

Referring to FIG. 1, a gas turbine engine 100 (such as a turbofan gas turbine engine) is illustrated according to various embodiments. Gas turbine engine 100 is disposed about axis of rotation 120. Gas turbine engine 100 may comprise a fan 140, compressor sections 150 and 160, a combustion section 180, and turbine sections 190, 191. Air compressed in compressor sections 150, 160 may be mixed with fuel and burned in combustion section 180 and expanded across turbine sections 190, 191. Turbine sections 190, 191 may include high pressure rotors 192 and low pressure rotors 194, which rotate in response to the expansion. Turbine sections 190, 191 may comprise alternating rows of rotary airfoils or blades 196 and static airfoils or vanes 198. A plurality of bearings, including bearings 115, 116, and/or 117, may support spools in gas turbine engine 100. FIG. 1 provides a general understanding of the sections in a gas turbine engine, and is not intended to limit the disclosure. The present disclosure may extend to all types of turbine engines, including turbofan gas turbine engines and turbojet engines, for all types of applications.

The forward-aft positions of gas turbine engine 100 lie along axis of rotation 120. For example, fan 140 may be referred to as forward of turbine section 190 and turbine section 190 may be referred to as aft of fan 140. Typically, during operation of gas turbine engine 100, air flows from forward to aft, for example, from fan 140 to turbine section 190. As air flows from fan 140 to the more aft components of gas turbine engine 100, axis of rotation 120 may also generally define the direction of the air stream flow.

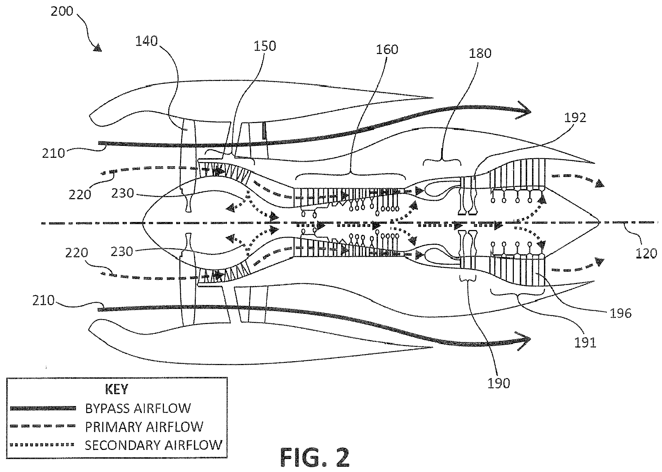

Referring to FIG. 2, a gas turbine engine 200 is illustrated according to various embodiments. Elements with the like element numbering as depicted in FIG. 1, are intended to be the same and will not be repeated for the sake of clarity. In various embodiments, during operation of gas turbine engine 200, airflow that enters fan 140 may be divided between engine airflows: bypass airflow 210, primary airflow 220, and/or secondary airflow 230. Bypass airflow 210 provides the majority of the thrust produced by the gas turbine engine 200. In various embodiments, bypass airflow 210 may flow outside of the engine core in gas turbine engine 200. Primary airflow 220 may be compressed as it travels through compressor sections 150, 160, and then mixed with fuel and burned in combustion section 180. The burned mix of air and fuel may then expand across turbine sections 190, 191, turning the turbines and generating additional thrust. Secondary airflow 230 may be any airflow different from the bypass airflow 210 or primary airflow 220. Secondary airflow 230 may be utilized for multiple purposes including, for example, cooling and pressurization. Secondary airflow 230 may ultimately be at least partially injected into primary airflow 220 at various points to be used, for example, to cool various components. Secondary airflow 230 and primary airflow 220 may be core engine airflows because they travel throughout the core of a gas turbine engine. Bypass airflow 210 travels outside of the engine core.

Referring to FIG. 3, an exemplary bearing assembly is depicted comprising at least one airflow passage to allow cooling airflow to pass through the bearing assembly. The cooling airflow may serve to cool the bearing without causing additional churning from the lubricant in the bearing cavity. Bearing assembly 300 may comprise a bearing housing 312, a bearing ring 314, at least one rotational member 316, and/or a bearing ring baffle 318. In various embodiments, bearing ring baffle 318 may be integral with bearing ring 314. Bearing housing 312 may be disposed radially outside of bearing ring 314. The region radially inside of the bearing ring 314 is referred to as the bearing cavity. In various embodiments, rotational member 316 may be a ball in a ball bearing, a roller in a roller bearing, and/or any other suitable type of rotational member. Any bearing type is within the scope of this disclosure.

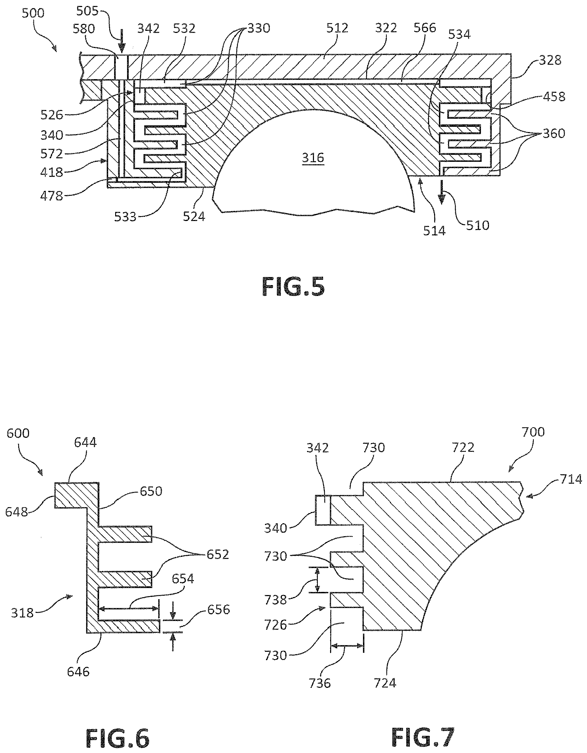

In various embodiments, bearing ring 314 may comprise a housing surface 322, an inner radial surface 324, a first axial end 326, and/or a second axial end 328. Housing surface 322 may form at least part of the outer radial surface of bearing ring 314. In various embodiments, bearing ring 314 may comprise at least one channel 330 and/or 334 disposed in first axial end 326 and second axial end 328, respectively. Channels 330 and 334 form at least a portion of one or more airflow passages 332 and 335, respectively, which may be formed in combination with bearing ring baffle 318. In various embodiments, bearing ring 314 may comprise a first airflow passage 332, which may be in first axial end 326, and/or a second airflow passage 335, which may be in second axial end 328. In various embodiments, first airflow passage 332 and second airflow passage 335 may be fluidly connected by a bridging channel, such as bridging channel 566 in FIG. 5.

In various embodiments, bearing housing 312 may comprise at least one passage inlet 368 and/or 370 going through bearing housing 312 that may align with a respective airflow passage. For example, a first passage inlet 368 may be aligned with a first airflow passage 332, and/or a second passage inlet 370 may be aligned with a second airflow passage 335. A passage inlet, such as first passage inlet 368, may be part of an airflow passage, such as first airflow passage 332. In various embodiments, a passage inlet, such as first passage inlet 368, may be comprised anywhere in bearing housing 312, bearing ring 314, and/or any other part of bearing assembly 300. In various embodiments, a first cooling airflow 305 may enter first passage inlet 368, travel through first airflow passage 332, and exit first airflow passage 332 through a first passage outlet 333. In various embodiments, a passage outlet, such as first passage outlet 333, may be a part of an airflow passage, such as first airflow passage 332, and may be comprised anywhere in bearing housing 312, bearing ring 314, and/or any other part of bearing assembly 300.

In various embodiments, first cooling airflow 305 may be heated as a result of first cooling airflow 305 traveling through first airflow passage 332. The heated airflow may be a first exit airflow 311. First cooling airflow 305 may have absorbed the heat produced by bearing assembly 300 during gas turbine engine operation in response to flowing through first airflow passage 332. Similarly, a second cooling airflow 375 may enter second passage inlet 370, travel through second airflow passage 335, and exit second airflow passage 335 through a second passage outlet 336. Second exit airflow 380 may also be heated because second cooling airflow 375 may have absorbed the heat produced by bearing assembly 300 during gas turbine engine operation in response to flowing through second airflow passage 335. As depicted in FIG. 3, in accordance with various embodiments, a cooling airflow may travel through an airflow passage by entering first airflow passage 332 from first passage inlet 368 in the bearing housing, and exit the airflow passage through first passage outlet 333. First exit airflow 311 and/or second exit airflow 380 may exit the bearing ring and be directed anywhere inside and/or outside of the gas turbine engine. For example, first exit airflow 311 and/or second exit airflow 380 may be directed into an engine airflow channel within the gas turbine engine, the bearing cavity, the atmosphere outside the gas turbine engine, and/or any other location inside or outside of the gas turbine engine. In various embodiments, first exit airflow 311 may not be directed into the bearing cavity.

Referring to FIG. 4, in accordance with various embodiments, an exemplary bearing assembly configured to cool a bearing with the passage of airflow through the bearing is depicted. Elements with like element numbering as depicted in FIG. 3 are intended to be the same and will not be repeated for the sake of clarity. As depicted in FIG. 4, in various embodiments, a first passage inlet 368 and a passage outlet 474 may both be disposed through bearing housing 412. In various embodiments, a passage inlet and a passage outlet may both be disposed on the same axial end of a bearing ring and/or on a different axial end of a bearing ring. For example, a passage inlet may be disposed on first axial end 426 and a passage outlet may be disposed on second axial end 428. In various embodiments, airflow passage 432, which may align with first passage inlet 368, may comprise channels 330, and an exit channel 472 that may align with passage outlet 474. In operation, a cooling airflow 405 may enter a bearing assembly 400 to cool it through first passage inlet 368, travel through airflow passage 432 and through exit channel 472, and exit through passage outlet 474. Cooling airflow 405 may be heated in response to traveling through airflow passage 432, absorbing heat produced by bearing assembly 400 during gas turbine engine operation. Therefore, exit airflow 411 may have a higher temperature than cooling airflow 405. In various embodiments, exit airflow 411 may be directed anywhere inside and/or outside of the gas turbine engine, for example, into an engine airflow channel within the gas turbine engine, the bearing cavity, the atmosphere outside the gas turbine engine, and/or the like. In various embodiments, exit airflow 411 may not be directed into the bearing cavity.

In various embodiments, cooling airflow may be reversed so cooling airflow enters through a passage inlet where passage outlet 474 is in FIG. 4, and exits through a passage outlet where first passage inlet 368 is in FIG. 4. In various embodiments, bearing assembly 400 may comprise a seal 478, which may prevent airflow from escaping airflow passage 432 between bearing ring 414 and bearing baffle 418.

Referring to FIG. 5, in accordance with various embodiments, an exemplary bearing assembly for cooling a bearing with the passage of airflow through the bearing is depicted. Elements with like element numbering as depicted in FIGS. 3 and/or 4 are intended to be the same and will not be repeated for the sake of clarity. As depicted in FIG. 5, in various embodiments, airflow passage 532 may have channels 330 on first axial end 526 and channels 534 on second axial end 328 of bearing ring 514. In various embodiments, cooling airflow 505 may enter through passage inlet 580, travel through entrance channel 572 and through airflow passage 532, which may span between first axial end 526 and second axial end 528 in bearing ring 514. Airflow passage 532 may be connected between first axial end 526 and second axial end 528 by a bridging channel 566.

In operation, cooling airflow 505 may enter passage inlet 580, travel through entrance channel 572, airflow passage 532 and/or bridging channel 566, and exit airflow passage 532 through a passage outlet as exit airflow 510. In various embodiments, exit airflow 510 may be directed anywhere inside and/or outside of the gas turbine engine, for example, into an engine airflow channel within the gas turbine engine, the bearing cavity, the atmosphere outside the gas turbine engine, and/or the like. In various embodiments, exit airflow 510 may not be directed into the bearing cavity. Exit airflow 510 may be heated because exit airflow 510 may have absorbed heat from bearing ring 514 as it traveled through airflow passage 532 or any other channel or path in bearing ring 514. In various embodiments, the passage inlet and the passage outlet may both be disposed through the bearing housing.

In various embodiments, one or more airflow passages may provide any path through bearing ring, bearing housing, or any other part of a bearing assembly to cool the bearing ring or bearing assembly. In various embodiments, there may be more airflow passages, passage inlets, and/or passage outlets than explicitly discussed in this disclosure. Additionally, in various embodiments, there may be more passage inlets and/or passage outlets than airflow passages in a bearing ring. For example, one airflow passage may have one passage inlet but split into two passage outlets, or one airflow passage may have two passage inlets which converge into one passage outlet, and/or the like.

Returning to FIG. 3, in various embodiments, a first axial end material 340 between at least one pair of channels 330, 334 may extend out from the inner radial surface 324 of bearing ring 314 a distance sufficient to contact bearing ring baffle 318. A plurality of circumferentially spaced apart notches 342 cut into material 340 may allow for the passage of cooling airflow. The "longer" material 340 between channels 330, for example, may allow an axial force of the bearing stack (e.g., an axial retention device that may be used to apply an axial direction force through bearing ring baffle 318 to bearing assembly 300) to be transferred from the bearing ring baffle 318 to the bearing ring 314. In various embodiments, material 340 disposed between channels 330 disposed in the first axial end 326 of the bearing ring 314 may be configured to contact the bearing ring baffle 318. In various embodiments, second axial end 328 of bearing ring 314 is disposed in contact with a housing shoulder 358 extending radially out from bearing housing 312. An axial force applied to bearing ring baffle 318 may maintain bearing ring 314 between bearing ring baffle 318 and housing shoulder 358. Bearing assembly 300 is not limited to providing the contact with the bearing ring baffle 318 in any particular configuration when bearing assembly 300 is assembled.

In various embodiments, bearing ring baffle 318 may be a circumferentially extending ring-like structure that may be configured to engage inner radial surface 324 of bearing ring 314. With combined reference to FIGS. 3 and 6, bearing ring baffle 318 includes a housing surface 644, an inner radial surface 646, a first axial end 648, and a second axial end 650. In various embodiments, bearing ring baffle 318 may comprise a plurality of fins 652 outwardly extending in an axial direction from the second axial end 650. Fins 652 may define at least a portion of one or more airflow passages 332 in combination with channels 330 disposed in inner radial surface 324 of bearing ring 314. The number of fins 652, and the length 654 and width 656 of each fin 652 may be selected to suit the conditions under which the bearing assembly will be operating. In various embodiments, each fin 652 may have a length 654 and a width 656 that may be substantially equal to those of the other fins 652. In various embodiments, length 654 and width 656 of any fin 652 may be different from that of any other fin 652.

With combined reference to FIGS. 3, 6, and 7, in various embodiments, the number of channels 730, and the depth 736 and width 738 of each channel 730, depicted in FIG. 7, may be selected to suit conditions under which the bearing assembly will perform (e.g., in a gas turbine engine). In various embodiments, a channel 730 may be shown to have a depth 736 and a width 738 that is substantially equal to those of other channels 730. In various embodiments, the depth and width of any channel 730 may be different from that of another channel 730.

In various embodiments, the mating fins 652 and channels 730 are sized such that airflow passages 332 may be formed there between of sufficient size to allow for the passage of airflow. In various embodiments, width 656 of each fin 52 may be less than width 738 of a mating channel 730, and length 654 of each fin 652 may be less than depth 736 of a mating channel 730. In various embodiments in which the depth and width of a fin differs from that of another fm, the corresponding channel is sized to mate with the respective fin to create the airflow passages 332. In various embodiments, the radial and circumferential positioning of the fins 652 and channels 730 may or may not be aligned with one another.

With combined reference to FIGS. 3, 6, and 7, in various embodiments, the fin length and channel depth of one or more mating fin and channel may be configured to form a smaller cross-sectional area in a passage outlet, for example first passage outlet 333 in FIG. 3. This may form a flow restriction at first passage outlet 333. For example, in various embodiments, depth 736 of the radially innermost channel 730 disposed in inner radial surface 324 of bearing ring 314 may be the same as depth 736 of the other channels. Length 654 of the radially innermost fin 652, however may be longer than length 654 of other fins 652. As a result, the cross-sectional area of the first passage outlet 333 between the end of the mating fin 652 and the base of the mating channel 730 may be less than the cross-sectional area of the rest of airflow passage 332, thereby creating a flow restriction at first passage outlet 333. First passage outlet 333 may be sized to help maintain the airflow passage 332 along inner radial surface 324 of bearing ring 314 filled with airflow.

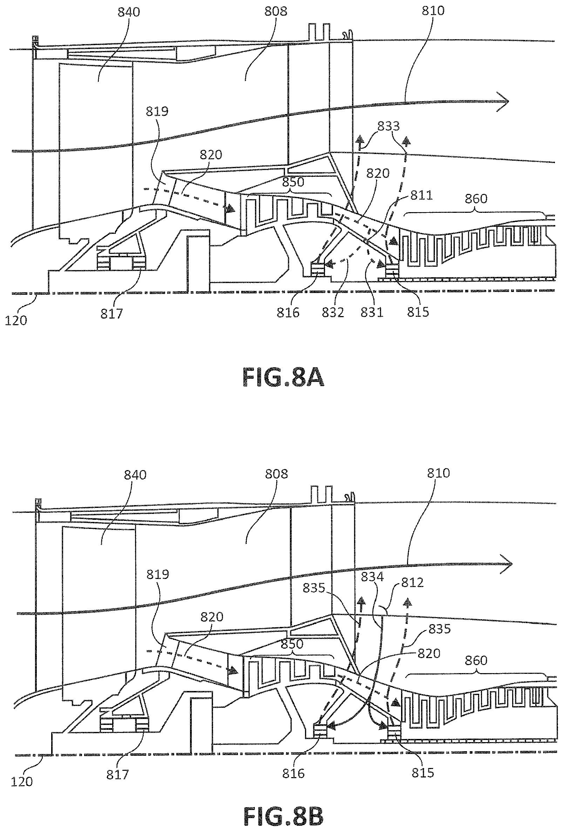

Referring to FIGS. 8A-8D, systems for cooling a bearing in a gas turbine engine are depicted, in accordance with various embodiments. As depicted, in various embodiments, a gas turbine engine may comprise a fan 840, a bypass airflow channel 808 through which a bypass airflow 810 may travel when the gas turbine engine is operating, a primary airflow channel 819 through which a primary airflow 820 may travel when the gas turbine engine is operating, a low pressure compressor (LPC) 850, and/or a high pressure compressor (HPC) 860. In various embodiments, the systems for cooling a bearing in a gas turbine engine may cool a high rotor thrust bearing 815, a low rotor thrust bearing 816, a fan rotor thrust bearing 817, and/or any other bearing in a gas turbine engine.

Generally, in various embodiments, systems for cooling a bearing in a gas turbine engine may take cooling airflow from a low pressure area in the gas turbine engine, for example from bypass airflow 810 or primary airflow 820 forward or aft of LPC, and forward of HPC, and direct the cooling airflow to a bearing in the gas turbine engine. The depictions of airflow being directed to a bearing in FIGS. 8A-8D are for illustrative purposes only, and should not be perceived to limit the location of cooling airflow entry and/or exit into or out of an airflow channel and/or a bearing. The cooling airflow may be taken from an engine airflow channel such as a bypass airflow channel 808, a primary airflow channel 819, a secondary airflow channel, or any other suitable airflow channel in a gas turbine engine. The cooling airflow may be taken from a low pressure area in the gas turbine engine because in a low pressure area, the cooling airflow is already a lower temperature than the bearings to be cooled, and therefore, no work is required to cool the cooling airflow. In various embodiments, cooling airflow may be taken from a higher pressure area anywhere in the gas turbine engine, but in response, the cooling airflow may have to go through some orifice to reduce the cooling airflow pressure and temperature before the cooling airflow may effectively serve to cool a bearing. Cooling airflow may be passed through an airflow passage in the bearing ring and/or bearing assembly, as discussed above in the description of FIGS. 1-7, and then released somewhere inside or outside of the gas turbine engine. The cooling airflow may be released into a low pressure environment, for example, bypass airflow channel 808 to join bypass airflow 810, a gearbox, the atmosphere outside of the gas turbine engine, and/or the like.

Referring to FIG. 8A, in various embodiments, cooling airflow may be taken from primary airflow 820 aft of LPC 850 and forward of HPC 860. Primary airflow 820 may exit primary airflow channel 819 at a hole 811. There may be a scoop over hole 811 configured to direct some of primary airflow 820 out of primary airflow channel 819 to serve as cooling airflow. The cooling airflow may travel out hole 811 and through one or more cooling entrance pathways 831 and 832. Cooling entrance pathway 831 may extend from primary airflow channel 819 to a passage inlet, for example first passage inlet 368 in FIG. 3, in high rotor thrust bearing 815. Cooling entrance pathway 832 may extend from primary airflow channel 819 to a passage inlet, for example first passage inlet 368 in FIG. 3, in low rotor thrust bearing 816. The cooling airflow may travel through cooling entrance pathways 831 and 832, enter the bearing assemblies of bearing 815 and/or 816, and flow through one or more airflow passages within the bearing assembly to cool the bearing assembly, as described in the description of FIGS. 1-7. In various embodiments, the cooling airflow may exit bearing 815 and/or 816 after absorbing heat and be passed through cooling exit pathways 833. Cooling exit pathways 833 may extend from a passage outlet in bearing 815 and/or 816, for example passage outlet 474 in FIG. 4, to bypass airflow channel 808. The cooling airflow may be vented into bypass airflow channel 808 to join bypass airflow 810.

Referring to FIG. 8B, in various embodiments, cooling airflow may be taken from bypass airflow 810 aft of LPC 850 and forward of HPC 860. A scoop 812 disposed in bypass airflow channel 808 may direct some of bypass airflow 810 out of bypass airflow channel 808 to serve as cooling airflow. A cooling entrance pathway 834 may extend from bypass airflow channel 808 to a passage inlet, for example first passage inlet 368 in FIG. 3, in high rotor thrust bearing 815 and/or low rotor thrust bearing 816. Cooling entrance pathway 834 may be aft of LPC 850 and forward of HPC 860. The cooling airflow may travel through cooling entrance pathway 834 to bearing 815 and/or 816, enter the bearing assembly of bearings 815 and/or 816, and flow through one or more airflow passages within the bearing assemblies to cool the bearing assemblies, as described in the description of FIGS. 1-7. In various embodiments, the cooling airflow may exit bearing 815 and/or 816, after absorbing heat from the bearing, and be passed through cooling exit pathways 835. Cooling exit pathways 835 may extend from a passage outlet in bearing 815 and/or 816, for example passage outlet 474 in FIG. 4, to bypass airflow channel 808. The cooling airflow may be vented out into bypass airflow channel 808 to join bypass airflow 810.

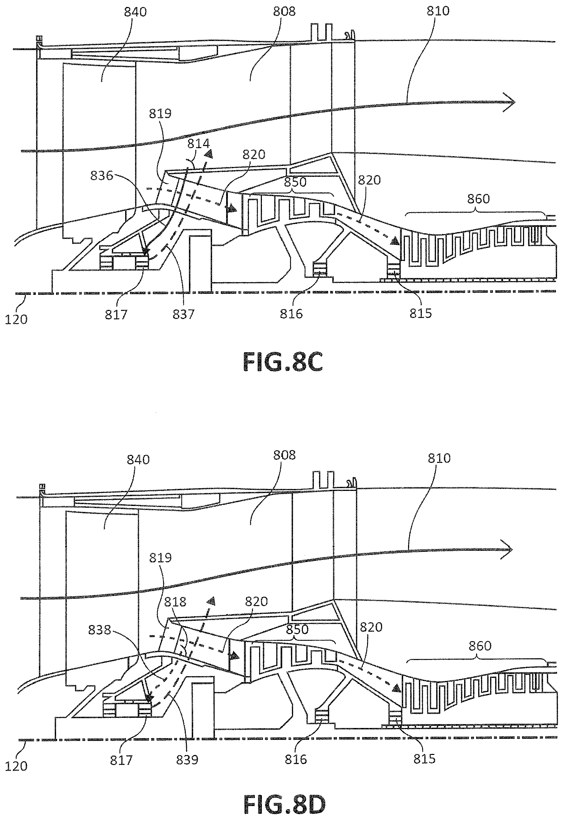

Referring to FIG. 8C, in various embodiments, cooling airflow may be taken from bypass airflow 810 forward of LPC 850. A scoop 814 disposed in bypass airflow channel 808 may direct some of bypass airflow 810 out of bypass airflow channel 808 to serve as cooling airflow. A cooling entrance pathway 836 may extend from bypass airflow channel 808 to a passage inlet, for example first passage inlet 368 in FIG. 3, in fan rotor thrust bearing 817. Cooling entrance pathway 836 may be forward of LPC 850. The cooling airflow may travel through cooling entrance pathway 836 to bearing 817, enter the bearing assembly of bearing 817, and flow through one or more airflow passages within the bearing assembly to cool the bearing assembly, as described in the description of FIGS. 1-7. In various embodiments, the cooling airflow, having absorbed heat from bearing 817, may exit bearing 817 through a passage outlet, and be passed through cooling exit pathway 837. Cooling exit pathway 837 may extend from a passage outlet in bearing 817, for example passage outlet 474 depicted in FIG. 4, to bypass airflow channel 808. The cooling airflow may be vented out into bypass airflow channel 808 to join bypass airflow 810.

Referring to FIG. 8D, in various embodiments, cooling airflow may be taken from primary airflow 820 forward of LPC 850. A scoop 818 disposed in bypass airflow channel 808 may direct some of primary airflow 820 out of primary airflow channel 819 to serve as cooling airflow. A cooling entrance pathway 838 may extend from primary airflow channel 819 to a passage inlet, for example first passage inlet 368 in FIG. 3, in fan rotor thrust bearing 817. Cooling entrance pathway 838 may be forward of LPC 850. The cooling airflow may travel through cooling entrance pathway 838 to bearing 817, enter the bearing assembly of bearing 817, and flow through one or more airflow passages within the bearing assembly to cool the bearing assembly, as described in the description of FIGS. 1-7. In various embodiments, the cooling airflow, having absorbed heat from bearing 817, may exit bearing 817 through a passage outlet, and be passed through cooling exit pathway 839. Cooling exit pathway 839 may extend from a passage outlet in bearing 817, for example passage outlet 474 in FIG. 4, to bypass airflow channel 808. The cooling airflow may be vented into bypass airflow channel 808 to join bypass airflow 810.

It would not be outside the scope of this disclosure to take cooling airflow from anywhere in the gas turbine engine, such as from a secondary airflow and/or the like, and pass it anywhere in a gas turbine engine to cool a bearing. Additionally, any bearing within a gas turbine engine may be cooled by cooling air taken from any airflow within and/or outside of the gas turbine engine. In various embodiments, a bearing may be cooled by cooling airflow traveling through numerous cooling entrance pathways and/or may vent the cooling airflow through numerous cooling exit pathways. Cooling entrance and exit pathways may comprise tubing and/or any other suitable system to direct cooling airflow to and/or from a desired location with the gas turbine engine.

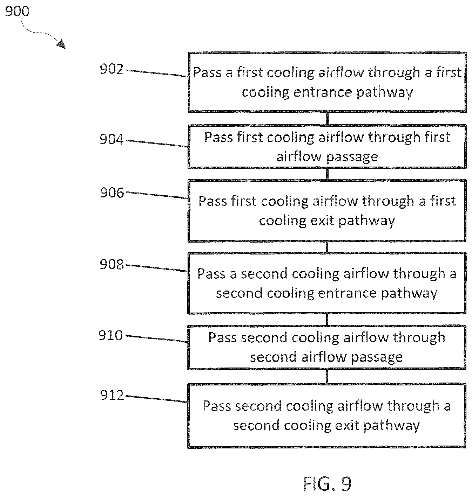

FIG. 9 illustrates a method 900 for cooling a bearing in a gas turbine engine, in accordance with various embodiments. With combined reference to FIGS. 3, 8A-D, and 9, in various embodiments, a first cooling airflow may be passed through a first cooling entrance pathway (step 902), such as cooling entrance pathway 831 and/or 832. The first cooling airflow may be taken from a first engine airflow channel, for example bypass airflow channel 808, and/or a core engine airflow channel such as primary airflow channel 819 and/or a secondary airflow channel. The cooling entrance pathway may extend from the first engine airflow channel to a first passage inlet, such as first passage inlet 368. The first cooling airflow may pass through a first airflow passage (step 904) in a bearing assembly. For example, first cooling airflow 305 may travel through first airflow passage 332 and exit the bearing assembly out of first passage outlet 333. The first cooling airflow may be passed through a first cooling exit pathway (step 906), such as cooling exit pathway 833. The first cooling exit pathway may extend from a first passage outlet, for example first passage outlet 333, to a second engine airflow channel. In various embodiments, the second engine airflow channel may be bypass airflow channel 808, and/or a core engine airflow channel such as primary airflow channel 819 and/or a secondary airflow channel, and/or may be the same or different engine airflow channel as the first engine airflow channel.

In various embodiments, a second cooling airflow may be passed through a second cooling entrance pathway (step 908). In various embodiments, the second cooling entrance pathway may be the same as the first cooling entrance pathway. The second cooling airflow may be taken from an engine airflow channel, for example bypass airflow channel 808, and/or a core engine airflow channel such as primary airflow channel 819 and/or a secondary airflow channel. The second cooling entrance pathway, for example cooling entrance pathway 831 and/or 832, may extend from a third engine airflow channel to a second passage inlet, such as second passage inlet 370. In various embodiments, the third engine airflow channel may be bypass airflow channel 808, and/or a core engine airflow channel such as primary airflow channel 819 and/or a secondary airflow channel, and/or may be the same or different engine airflow channel as the first and/or second engine airflow channel. The second passage inlet may be part of the same bearing assembly as the first passage inlet (in step 902) or part of a different bearing assembly.

In various embodiments, the second cooling airflow may pass through a second airflow passage (step 910) in a bearing assembly. For example, second cooling airflow 375 may travel through second airflow passage 335 and exit the bearing assembly out of second passage outlet 336. The second airflow passage may be a part of the same bearing assembly as the first airflow passage (in step 904), or part of a different bearing assembly. The second cooling airflow may pass through a second cooling exit pathway (step 912), for example cooling exit pathway 833, which may extend from a second passage outlet to a fourth engine airflow channel. In various embodiments, the second exit pathway may be the same as the first exit pathway. In various embodiments, the fourth engine airflow channel may be the same or different engine airflow channel as the first engine airflow channel, the second engine airflow channel, and/or the third engine airflow channel. In various embodiments, method 900 may be used to cool a high rotor thrust bearing 815, a low rotor thrust bearing 816, a fan rotor thrust bearing 817, and/or the like.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A bearing cooling system in a gas turbine engine (100;200), comprising:
a bearing ring (314;414;514);
a rotational member (316) coupled to the bearing ring (314;414;514);
a bearing housing (312;412;512) coupled to a housing surface (322) of the bearing ring (314;414;514), the bearing housing (312;412;512) comprising a first passage inlet (368;580) configured to allow a cooling airflow;
a first airflow passage (332;432;532) through the bearing ring (314;414;514) aligned with the first passage inlet (368;580), wherein the first airflow passage (368;580) is configured to allow the cooling airflow and comprises a first passage outlet (333);
a cooling entrance pathway (831,832;834;836;838) extending from a first engine airflow channel to the first passage inlet (368;580); and
a cooling exit pathway (833;835;837;839) extending from the first passage outlet (333) to a second engine airflow channel.

2. The bearing cooling system of claim 1, wherein the first engine airflow channel is at least one of a primary airflow channel (819), a secondary airflow channel, or a bypass airflow channel (808).

3. The bearing cooling system of claim 2, wherein the second engine airflow channel is at least one of the primary airflow channel (819), the secondary airflow channel, or the bypass airflow channel (808).

4. The bearing cooling system of claim 2 or 3, wherein the cooling entrance pathway (831...838) extends from the primary airflow channel (819) at a point forward of a low pressure compressor (850), or at a point aft of a low pressure compressor (850).

5. The bearing cooling system of any preceding claim, wherein the first engine airflow channel comprises a scoop (812) configured to guide a first engine airflow into the cooling entrance pathway (831...838).

6. The bearing cooling system of any preceding claim, wherein the bearing cooling system is configured to cool at least one of a low rotor thrust bearing (816), a high rotor thrust bearing (815), or a fan rotor thrust bearing (817).

7. The bearing cooling system of any preceding claim, further comprising a second airflow passage (335) through the bearing ring (314;414;514) aligned with a second passage inlet (370) in the bearing housing (312;412;512);
wherein, optionally, the first airflow passage (332;432;532) and the second airflow passage (335) are fluidly connected by a bridging channel (566) in the bearing ring (314;414;514).

8. The bearing cooling system of any preceding claim, wherein the first passage inlet (368;580) and the first passage outlet (333) are disposed on a first axial end (326;426;526) of the bearing ring (314;414;514), or
the first passage outlet (333) is disposed on a second axial end (328;428;528) of the bearing ring (314;414;514).

9. A method for cooling a bearing in a gas turbine engine (100;200), comprising:
passing a first cooling airflow, via a first cooling entrance pathway (831...838), from a first engine airflow channel to a first passage inlet (368;580) in a bearing housing (312;412;512);
passing the first cooling airflow through a first airflow passage (332;432;532) in a bearing ring (314;414;514);
passing the first cooling airflow, via a first cooling exit pathway (833...839), from a first passage outlet (333) to a second engine airflow channel.

10. The method of claim 9, wherein the first engine airflow channel is at least one of a primary airflow channel (819), a secondary airflow channel, or a bypass airflow channel (808);
wherein, optionally, the second engine airflow channel is at least one of the primary airflow channel (819), the secondary airflow channel, or the bypass airflow channel (808).

11. The method of claim 9 or 10, wherein the bearing is at least one of a low rotor thrust bearing (816), a high rotor thrust bearing (815), or a fan rotor thrust bearing (817).

12. The method of claim 9, 10 or 1 l, further comprising:
passing a second cooling airflow, via a second cooling entrance pathway, from a third engine airflow channel to a second passage inlet (770) in the bearing housing (312;412;512);
passing the second cooling airflow through a second airflow passage (335) in the bearing ring (314;414;514);
passing the second cool airflow, via a second cooling exit pathway, from a second passage outlet (336) to a fourth engine airflow channel.

13. The method of claim 12, wherein the first engine airflow channel and the third engine airflow channel are at least one of a primary airflow channel (819), a secondary airflow channel, or a bypass airflow channel (808);
wherein, optionally, the second engine airflow channel and the fourth engine airflow channel are at least one of the primary airflow channel (819), the secondary airflow channel, or the bypass airflow channel (808).

14. A gas turbine engine (100;200), comprising:
a bypass airflow channel (808);
a core engine airflow channel (819);
a bearing, comprising:
a bearing housing (312;412;512) comprising a first passage inlet (368;580);
a bearing ring (314;414;514); and
a first airflow passage (332;432;532) disposed within the bearing ring (314;414;514), the first airflow passage (332;432;532) being aligned with the first passage inlet (368;580), wherein the first airflow passage (332;432;532) comprises a first passage outlet (333);
a cooling entrance pathway (831...838) extending from the core engine airflow channel (819) to the first passage inlet (368;580); and
a cooling exit pathway (833...839) extending from the first passage outlet (333) to the bypass airflow channel (808).

15. The gas turbine engine of claim 14, wherein the cooling entrance pathway (831...838) is disposed forward of a low pressure compressor (850).
